# EUROPEAN PATENT APPLICATION

(11) **EP 2 397 288 A1**
(43) Date of publication of application: **21.12.2011**
(21) Application number: 10165866.4
(22) Date of filing: 14.06.2010
(51) Int. Cl.: B27M 3/00, C09J 5/00

(54) **A method for joining at least two elements**

(71) Applicant: Nederlandse Organisatie voor Toegepast -Natuurwetenschappelijk Onderzoek TNO, 2628 VK Delft (NL)
(72) Inventor: Botter, Hendrik, 2628 VK Delft (NL); Homan, Waldemar Jozef, 2628 VK Delft (NL)
(74) Representative: Hatzmann, Martin

(57) **Abstract**

A method for joining at least two elements (1, 2), for example solid wood parts, the elements (1, 2) having at least partly mating contact surfaces that are to be connected to each other, wherein a curable adhesive (3) is applied to secure the contact surfaces to each other, wherein friction enhancing means (4) are applied between said contact surfaces for enhancing friction after the application of the adhesive (3).

Also, there is provided an assembly of at least two elements the elements (1, 2) having opposite contact surfaces, the contact surfaces being connected by an adhesive, wherein friction enhancing means are provided between the contact surfaces in addition to said adhesive.

## Description

The present method relates to a method for joining at least two elements, for example freshly cut (i.e. relatively wet) solid wood parts, the elements having at least partly mating contact surfaces that are to be connected to each other, wherein a curable adhesive is applied to secure the contact surfaces to each other.

Such a method is commonly known from the prior art. For example, in a known method, wooden elements are connected to each other using finger joints. Such joints usually include opposite mating profiles, providing mating projections and cavities there-between, which are glued with respective contact surfaces to each other.. Usually, during production, the elements are pressed onto each other and transported to another processing station. The resulting connections are relatively strong and durable.

The pressing together of the elements that are to be joined has the disadvantage that it usually requires the use of a dedicated pressure application system. However, the uncured glue as such can have a lubricating effect, such that the elements slide apart in case pressure or clamping force is relieved too soon. Thus, the pressure will have to be maintained for a relatively long period of time before the joined elements can safely be removed from the pressure application system.

As a result, the processing of large quantities of joints will require a relatively large amount of processing time of such a system. In some applications, speeding up the curing of glue can be achieved, for example under the influence of radiation (for example microwave or high frequency radiation) and/or heat, and depending on the type of adhesive. However, such treatment is not always possible, for example due to certain limitations relating to the elements material, their dimensions and/or other factors, and/or due to a desired type of adhesive for connecting the elements. In such cases, for example, relatively slow adhesive curing can be desired in order to achieve best bond properties.

The present invention aims to solve or at least alleviate the problems of the known methods. Particularly, the invention aims to provide an improved method for joining elements, wherein a durable joint can be obtained in an efficient manner. More particularly, it is desired to provide a method, wherein elements can be joined without having to provide for long pressure application times.

To this aim, advantageously, the method according to the invention is characterised by the features of claim 1.

According to the invention, the method is characterised in that friction enhancing means are applied between said contact surfaces for enhancing friction after the application of the adhesive.

As a result, the elements can simply be held in a joined position using friction enhancing means enhancing friction between the contact surfaces (for example by locking the elements to each other at/along the contact surfaces). The friction enhancing means can act as slide prevention means, preventing the joined elements sliding away from each other (before the adhesive has been cured). For example, a clamping force or pressure for joining the elements can be released swiftly, when the elements are held in said joined position. Particularly, the friction enhancing means are used to assist the curable adhesive in connecting the elements together. For example, in a further elaboration of the invention, the friction enhancing means can lock the two elements when they have been joined with each other (with respective contact surfaces being in suitable connecting positions). In that case, the friction enhancing means are locking means. The locking allows curing of the adhesive without having to apply external pressure onto the elements during a curing period. Thus, the curing of the adhesive can be carried out at another location than a location where the elements are initially joined to each other. As a result, a prolonged use of a pressure application system pressing the parts together can be avoided.

The friction enhancing means can have various configurations. According to a further embodiment, for example, the friction enhancing means can be friction enhancing elements, enhancing friction between abutting surfaces of the elements to be joined (preventing the surfaces sliding apart from one another), preferably by reaching at least partly into at least one contact surface, for example into both contact surfaces. The friction enhancing means can also be configured differently, for example by including a second adhesive (i.e. a secondary adhesive) which cures before curing the curable (primary) adhesive

Also, an aspect of the invention provides an assembly of at least two elements, for example provided by a method according to the invention. Advantageously, the elements have opposite contact surfaces, wherein a layer of friction enhancing means reaches into at least one of the contact surfaces. Thus, above-mentioned advantages can be provided.

Further advantageous embodiments of the invention are described in the dependent claims. These and other aspects of the invention will be apparent from and elucidated with reference to non-limiting embodiments described hereafter, shown in the drawings.
Figure 1 depicts a plan view of an assembly of joined elements according to a non-limiting embodiment of the invention;
Figure 2 depicts a cross-section over line II-II of Fig. 1;
Figure 3 depicts a detail Q of Fig. 2;
Figure 4 schematically shows an apparatus for pressing parts together;
Figure 5 is similar to Fig. 3, depicting part of a second embodiment; and
Figure 6 is similar to Fig. 3, depicting part of a third embodiment.

Similar or corresponding features are denoted by similar or corresponding reference signs in this application.

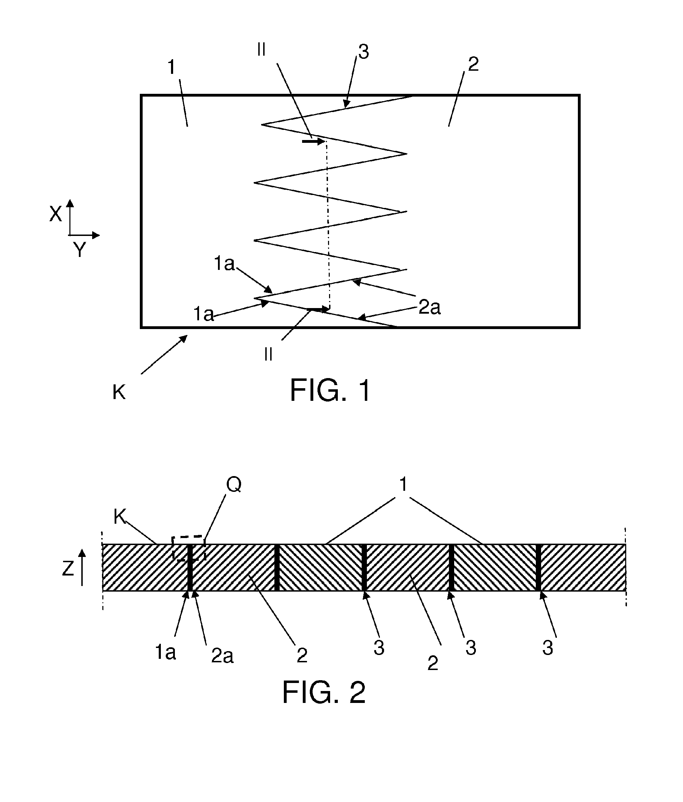

Figures 1-3 depict a non-limiting first embodiment of an assembly K of, in this case, two elements 1, 2 that have been connected to each other along opposite contact surfaces 1a, 2a. Particularly, adhesive 3 has been applied between the contact surfaces (serving as bonding surfaces) to hold the elements 1, 2 together after curing. According to a further embodiment (not depicted), the element K can be made of more than two parts, wherein all the parts are joined via respective glue layers between respective contact surfaces.

Each of the elements 1, 2 as such can have various shapes and dimensions, as will be appreciated by the skilled person. Also, the elements 1, 2 can have the same dimensions, or they can have mutually different dimensions. For example, the elements 1, 2 can be solid, massive elements, for example having closed (for example smooth) contact surfaces facing each other.

In the present embodiment, the elements 1, 2 are beams, plates or sheets 1, 2, which form a composite rectangular element K (having a thickness measured in a Z-direction that is relatively small compared to dimensions measured in other orthogonal directions X, Y). The elements 1, 2 can also be dimensioned differently. The composite element K can have various shapes, for example straight, curved, rectangular (as in Fig. 1), square, convex, concave, elongated, beam- or rodlike, and a combination of these and/or other shapes, as will be appreciated by the skilled person.

A resulting structure K can be used in an advantageous manner in/as construction element. The assembly (i.e. a composite element) K can comprise or be used to provide, for instance, plate material, a wall, laminate, a sandwich construction, a construction block, a construction beam, a door, a window, a window casings, ceiling parts, board, a floor part, a roof box and/or the like.

For example, the assembly K can be relatively large, made of relatively large massive components 1, 2 (this contrary to, for example, composites that are made of fiber reinforced of wood chips material). As a non-limiting example, each of elements 1, 2 can have a length, measured along a first orthogonal direction X, of at least 1 cm, particularly at least 10 cm, for example 0.5 meter or more. Also, each of the elements 1, 2 can have a width, measured along a second orthogonal direction Y, of at least 1 cm, particularly at least 10 cm, for example 0.5 meter or more. A thickness measured along a third orthogonal direction Z, of each element 1, 2 can be at least circa 1 mm, for example at least 1 cm, or a different thickness.

Various types of adhesive 3 can be applied. Depending on the elements used, good results can be obtained with adhesive that is or contains a curable epoxy resin, and alternatively with adhesive that is or contains a curable polyurethane adhesive. Also, for example, the adhesive can be of a phenol formaldehyde type, or a resorcinol formaldehyde, or a phenolresorcinol formaldehyde type. Other examples of suitable adhesives are or include: ureum formaldehyde, melamine, melamine formaldehyde, melamine ureum formaldehyde, melamine ureum phenol formaldehyde, isocyanate (PDMI), ethylene vinyl acetate (EVA), polyvinylacetate (PVAc), acrylate, cyanoacrylate, methylemethacrylate, silicones, and Modified Silane poymers.

Each of the elements 1, 2 can be made of various materials. The elements 1, 2 can be made of the same material, but that is not essential. Good results have been achieved in case each element 1, 2 is made of wood (i.e. each element is a lignocellulosic part). According to a further embodiment, each of the parts 1, 2 is made of hardwood, for example having a dry wood density of at least 800 kg/m³.

Also, good results have been achieved when the elements 1, 2 are relatively wet wooden parts, for example freshly cut hardwood (i.e. lignocellulosic elements having a dry wood density of at least 800 kg/m³ and having a water content of 25 w% or more). In case of joining wet (for example wooden) elements 1, 2, preferably, an adhesive 3 is used that can cure and connect such elements 1, 2, for example (but not limited to) a curable epoxy resin glue 3, and alternatively with a curable polyurethane adhesive 3.

Alternatively, one or both parts 1, 2 can be (a) plastic, fibre reinforced plastic, metal, rubber, concrete, stone, brick, or ceramics part(s). Other materials can be applied as well.

The mating contact surfaces of the elements 1, 2 can have various configurations, as will be clear to the skilled person. The contact surfaces can be fully mating (as in Fig 1), or partly mating (for example in case voids are present between the surfaces, after having joined the two elements 1, 2).

In the present example, the mating contact surfaces are provided by mating projections (i.e. convex parts) and cavities (i.e. concave parts) of the opposite sides of the elements 1, 2. In this example, each of the elements 1, 2 includes a plurality of such projections and cavities, at least partly engaging each other when the elements 1, 2 have been joined. Alternatively, a single projection and mating cavity can be provided to define a single mating contact surface between the two elements 1, 2 that are to be joined.

More particularly, in the present example, the mating projections and cavities of the elements 1, 2 define a finger joint structure, in this case having tapered contact surfaces (with V-shaped cross-sections, as follows from Fig. 1). Each contact surface can also be shaped differently, for example substantially conical, frusco-conical, wedge-shaped, U-shaped (in cross-section), a combination of such shapes and/or differently shaped.

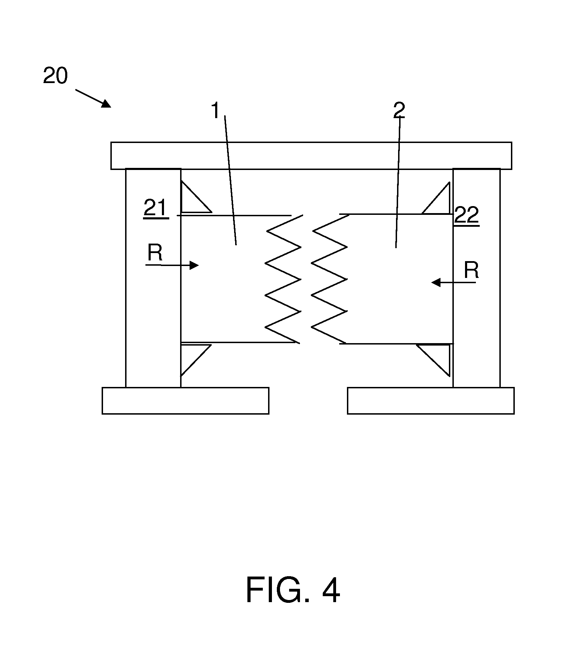

Figure 4 depicts a non-limiting example of a (preferably automated) positioning system 20 that is configured to hold or support the elements 1, 2, and to press the elements 1, 2 with the contact surfaces towards each other, for joining the elements 1, 2. For example, the system 20 can include two supports 21, 22 to hold the parts 1, 2, wherein the system 20 can move the supports 21, 22 towards each other and away from each other. The system 20 can include a glue application device that is configured to apply the curable adhesive 3 (usually being in a liquid -i.e. wet- state before curing) to one or both of the bonding surfaces 1a, 2a, before the surfaces 1a, 2a are moved towards each other. The applied adhesive can be pressed and spread between the contact surfaces 1a, 2a when the elements 1, 2 are joined by the system 20, thereby forming a relatively thin curable bonding layer for bonding the surfaces 1a, 2a.

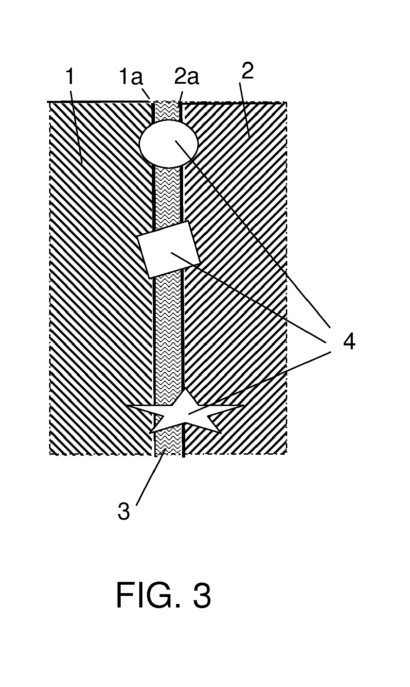

According to a preferred embodiment, the elements 1, 2 are joined by a method (for example using the system 20 shown in Fig. 4, wherein the curable adhesive 3 is applied between the respective contact surfaces to secure the contact surfaces 1a, 2a to each other, wherein friction enhancing means 4 are applied between said contact surfaces as well, for enhancing friction after application (and during curing) of the adhesive 3. Examples of embodiments of such friction enhancing means 4 are shown in the detail of Fig. 3.

The friction enhancing means 4 (which differ from the adhesive, i.e. are not the curable adhesive 3) can have various configurations. Good results have been achieved by friction enhancing means 4 that provide a clamping or locking engagement between the elements 1, 2, at the contact surfaces 1a, 2a, thereby holding the elements 1, 2 together at the opposite contact surfaces (and preventing the surfaces to slide away from each other). Thus, any subsequent application of external pressure to hold the elements 1, 2 together during curing of the adhesive can be reduced or avoided. As a result, the elements 1, 2 can be transported to another location (for example away from a joining/pressing system 20), to be processed further. Various subsequent processing steps can be carried out, for example (but not limited to) a curing and/or drying step, coating, impregnation, cutting, sawing, and the-like.

In the present first embodiment, rigid, massive, friction enhancing means 4 are applied between the contact surfaces 1a, 2a for mechanically locking the main elements 1, 2 to each other (the respective friction enhancing means can then be called 'locking means' or 'blocking means'). For example, the friction enhancing means can include relatively small rigid locking elements 4, for example rigid particles, beads. Particularly, at least one of the contact surfaces 1a, 2a can be provided with a layer of a plurality of such friction enhancing mean 4, to lock the elements 1, 2 to each other during a pressing step.

The rigid locking elements 4 can be made of various materials, for example rigid lignocellulosic material, for example hardwood material, metal, alloy, stone or stone-like material, for example sand. Preferably, when the elements 1, 2 are both lignocellulosic elements, lignocellulosic locking elements 4 are used.

Each of the friction enhancing locking elements 4 can have various shapes, as follows from Fig. 3. Locking elements 4 can be applied that all have the same shape, and the same dimensions. Also, mutually different locking elements 4 can be used, for example having different shapes and/or different dimensions.

The locking elements 4 can be relatively small, compared to the dimensions of the elements 1, 2. For example, each locking element 4 can have a cross-section measured in parallel with the respective contact surfaces 1a, 2a that is at least ten times smaller than the surface area of the respective contact surfaces 1a, 2a, for example at least fifty times smaller than the surface area of the respective contact surfaces 1a, 2a.

Alternatively, for example, each locking element 4 can have a cross-section measured in parallel with the respective contact surfaces 1a, 2a that is in the range of about half the surface area of the respective contact surfaces 1a, 2a to a tenth of that surface area.

Also, for example, in a non-limiting embodiment, a maximum size of each of the locking elements 4 can be 1 mm, particularly 0.5 mm.Alternatively, a maximum size of each of the locking elements 4 can be larger than 1 mm, for example about 4 mm or larger.

Besides, for example, a minimum size of each of the friction enhancing elements can be 0.1 mm, for example about 0.4 mm, or smaller than 0.1 mm, for example a minimum size of 0.01 mm.

In a further preferred embodiment, the rigid locking elements 4 can have a hardness that is higher than the hardness of at least one (for example each) of the two elements 1, 2 (at least at a respective contact surface of the element 1, 2). For example, a difference in hardness between a locking element's hardness and the hardness of a main element 1, 2 can be at least one, measured on the hardness scale of Mohs (commonly known).

Alternatively, the rigid locking elements 4 can have a hardness that is about the same as the hardness of at least one of the two elements 1, 2 (at least at a respective contact surface of the element 1, 2). In yet a further exemplary embodiment, the rigid locking elements 4 can have a hardness that is higher than the hardness of one of the two elements 1, 2, the hardness of the elements 4 being about the same as a hardness of the other element 2, 1.

As follows from Fig. 3, according to an embodiment, at least some of the locking elements 4 may indent at least one (for example both) of the two elements 1, 2 at respective contact surfaces, to be at least partly embedded in the element(s) 1, 2. As a result, a firm mechanical locking can be achieved.

The locking may be achieved by application of the locking elements 4 between the main elements 1, 2, and by bringing the elements 1, 2 towards each other in a first direction R (such as in Fig 4). In that case, the elements 1, 2 may be positioned such that their contact surfaces extend substantially in at least one second direction that differs from said first direction R (for example a second direction that includes an angle with said first direction R, for example but not limited to an angle in the range of 10 to 80 degrees). In an alternative embodiment, during movement of the elements 1, 2 towards each other, the elements 1, 2 may be positioned such that their contact surfaces extend at least partly in said first direction R.

At least some of the hard, rigid locking elements 4 can be forced (for example substantially normally) into both contact surfaces 1a, 2a of the elements 1, 2 by pressing the surfaces together. Fig. 3 shows an example of a resulting product, the hard locking elements 4 having been pressed into both contact surfaces 1a, 2a, and showing a glue line of adhesive 3 between the elements (the adhesive providing a final connecting force after curing). Since the locking elements 4 are harder than the elements 1, 2 at their contact surfaces, the locking elements 4 as such have not, or substantially not, been deformed during the pressing step. This contrary to the two locally indented contact surfaces 1a, 2a.

In one embodiment, the locking elements 4 are applied simultaneously with application of the adhesive 3. For example, the locking elements 4 can be mixed in the curable adhesive 3 before the adhesive is being applied. Alternatively, for example, the curable adhesive 3 can be applied to at least one contact surface 1a, 2a of the main elements 1, 2, after which the friction enhancing elements 4 are applied (for example to the adhesive 3).

Also, for example, a bonding medium can be used to bond the locking elements 4 to at least one of the contact surfaces 1a, 2a. Said curable adhesive 3 can be the bonding medium. Alternatively, a dedicated bonding medium can be applied, different from the curable adhesive 3.

### Example

An experiment was carried out, wherein two hardwood elements 1, 2, having a configuration as shown in Fig. 1, 2 were finger jointed to each other by a method according to the invention. A curable epoxide glue was applied, wetting the contact surfaces 1a, 2a, for bonding the elements 1, 2 to each other. Also, in experiments, a polyurethane glue was used. Locking elements 4, consisting of small ground hardwood parts, had been applied to the glue as well. In the experiment, a minimum dimension of the parts was 0.4 mm, and a maximum dimension 1 mm.

After application of the glue and the hardwood parts, the elements 1, 2 were pressed onto each other (as in Fig. 4). It has been found that as a result, the elements 1, 2 were locked together, and could be jointly transported to another location, before the glue was allowed to develop handling strength. Also, after further inspection of a bonding line between the elements, it was found that the hardwood parts had been pressed into each of the two wooden elements, leading to the locking effect.

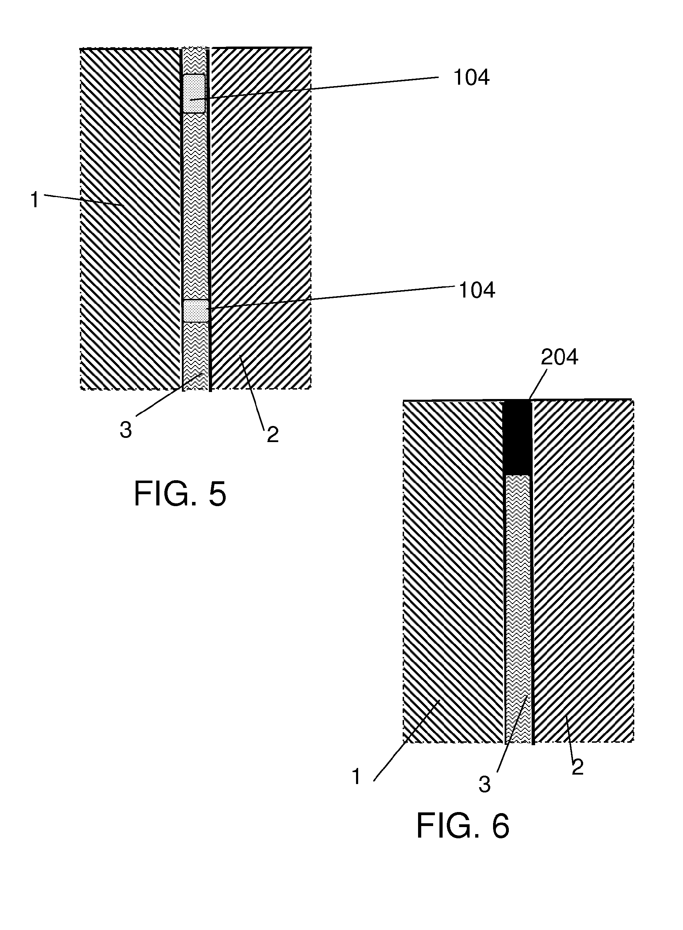

The present invention is not limited to application of rigid, hard locking elements. According to an alternative embodiment, the friction enhancing means can include resilient locking elements 104, for example elastic particles. This is shown in Figure 5. The resilient locking elements 104 can be used instead of the above-mentioned locking elements 4 (or in addition there-to), and can provide an internal clamping force between the two elements 1, 2 when they are pressed together. For example, when the elements 1, 2 are both lignocellulosic elements, resilient lignocellulosic elements 4 can be used, for example elements made of softwood.

Also, in an alternative embodiment, the friction enhancing means can include adhesive dispersing elements, for example breakable adhesive containing elements, for locally dispersing a second adhesive between the elements 1, 2 when they are pressed onto each other. The second adhesive has a different composition than a composition of the (main) curable adhesive 3. The second adhesive can be configured to cure (and to locally connect the two elements 1, 2 to each other) before curing the curable adhesive 3. Such adhesive dispersing/containing elements can be used instead of the above-mentioned locking elements 4, or in addition there-to. For example, in a non-limiting embodiment, the second adhesive can be configured to cure within about one to five minutes or faster, for example within 10 seconds (such as one to five seconds).

The second adhesive can achieve a first (relatively) connecting force to hold the elements 1, 2 together, after which the main adhesive 3 can be cured to provide a final connecting force (being significantly higher than the first connecting force).

Figure 6 shows a further alternative embodiment, which differs from the above-mentioned examples in that the friction enhancing means includes a second adhesive 204 which may cure (and locally connect the two elements 1, 2 to each other) before curing the curable adhesive 3, at least part of the second adhesive being applied at a different location between the surfaces than the curable adhesive 3.

The present invention provides various advantages, such as achieving improved bonding of the elements, strong and reliable bonds, and higher throughput of a system 20 for pressing the elements together. Moreover, the invention is well suited for interconnecting hardwood elements, using a suitable adhesive, wherein the friction enhancing means can prevent slipping the elements from each other after the adhesive has been applied there-between. Optionally, the friction enhancing means 4, 104, 204 as such may serve as spacer means as well, for holding the opposite bonding surfaces 1a, 2a of the elements 1, 2 at a certain (small) glue line receiving space from each other.

It is to be understood that in the present application, the term "comprising" does not exclude other elements or steps. Also, each of the terms "a" and "an" does not exclude a plurality. Any reference sign(s) in the claims shall not be construed as limiting the scope of the claims.

For example, according to a further embodiment, one or both elements can be made of a metal or alloy.

Besides, according to a further embodiment, each element can be made of a magnetically attractable material. In that case, good results are expected by application of friction enhancing means that are configured to enhance friction using magnetic force (for example friction enhancing means consisting of or including magnetic parts).

Also, the method can include connecting two parts to form a composite element K, or more than two parts. In case the element K, to be manufactured, contains more than two parts, for example, the method can include joining the parts when they are all moist, wherein spaced-apart bonding surfaces are provided between all the parts, to be connected using a respective glue layer. Besides, a method for joining a plurality of parts can involve a sequence of gluing two parts to provide a composite element, and subsequently gluing a further part to the resulting composite element, until a desired number of parts has been joined together.

Besides, the pressing together of the elements 1, 2 can be achieved in various ways, for example by a system 20 that is specifically adapted to apply such a pressure, or in a different manner, for example by manual pressure.

## Claims

1. A method for joining at least two elements (1, 2), for example solid wood parts, the elements (1, 2) having at least partly mating contact surfaces that are to be connected to each other, wherein a curable adhesive (3) is applied to secure the contact surfaces to each other, **characterised in that** friction enhancing means (4) are applied between said contact surfaces for enhancing friction after the application of the adhesive (3).

2. The method according to claim 1, wherein at least some of the friction enhancing means (4) are forced into at least one contact surface by pressing the surfaces together.

3. The method according to claim 1 or 2, wherein the friction enhancing means include rigid locking elements, for example rigid particles.

4. The method according to any of the preceding claims, wherein the friction enhancing means include resilient locking elements, for example elastic particles.

5. The method according to any of the preceding claims, wherein the friction enhancing means include adhesive dispersing elements, locally dispersing a second adhesive which cures before curing the curable adhesive (3).

6. The method according to any of the preceding claims, wherein the friction enhancing means includes a second adhesive which cures before curing the curable adhesive (3), at least part of the second adhesive being applied at a different location between the surfaces than the curable adhesive (3).

7. The method according to any of the preceding claims, wherein the joined elements (1, 2) are transported from a first location to a second location after the friction enhancing means have been applied to lock the elements (1, 2) to each other, wherein the elements (1, 2) are subjected to at least one treatment step, for example a curing and/or drying step, at the second location.

8. The method according to any of the preceding claims, wherein the friction enhancing means are rigid friction enhancing elements having a hardness that is equal to or higher than a hardness of at least one of the elements (1, 2) that are to be joined.

9. A method according to any of the preceding claims, wherein at least one of the elements (1, 2) is a lignocellulosic part.

10. A method according to any of claims 1-9, wherein at least one of the elements (1, 2) that are to be joined, is made of a metal or alloy.

11. A method according to any of claims 1-10, wherein at least one of the elements (1, 2) that are to be joined, is made of a magnetically attractable material, wherein the friction enhancing means are configured to enhance friction using magnetic force.

12. The method according to any of the preceding claims, wherein the contact surfaces are surfaces of a finger joint structure.

13. An assembly of at least two elements (1, 2), for example provided by a method according to any of the preceding claims, the elements (1, 2) having opposite contact surfaces, the contact surfaces being connected by an adhesive, wherein friction enhancing means are provided between the contact surfaces in addition to said adhesive.

14. An assembly according to claim 13, wherein the friction enhancing means have a hardness that is about equal to or higher than a hardness of at least one of the element (1, 2) at a respective contact surface.

15. An assembly according to claim 13 or 14, wherein the friction enhancing means have a cross-section measured in parallel with the respective contact surfaces that is about half the surface area of the respective contact surfaces, or smaller.
